# EUROPEAN PATENT APPLICATION

(11) **EP 1 721 503 A1**
(43) Date of publication of application: **15.11.2006**
(21) Application number: 06250637.3
(22) Date of filing: 07.02.2006
(51) Int. Cl.: A01D 34/416

(54) **Twisted trimmer line**

(30) Priority: 13.05.2005 US 129539
(71) Applicant: Fogle, Fohn R., Carefree, AZ 85377 (US); Phillips, Robert L., Scottsdale, Arizona 85254 (US)
(72) Inventor: Fogle, John R., Carefree, Arizona 85377 (US)
(74) Representative: Johnstone, Helen Margaret

(57) **Abstract**

An elongated string trimmer line has a filament body (124 to 202) with a longitudinal axis, and a plurality of protruding lobes extend from the filament body along its length. The trimmer line is are rotated about the longitudinal axis of the filament body from about 0.25 to 2.0 rotations per inch.

## Description

### BACKGROUND

Rotary string trimmer machines utilizing lengths of nylon monofilament trimmer line or the like are widely used for cutting weeds and other vegetation. Typically, the trimmer line which is used in such machines is extruded nylon monofilament, generally having a circular cross section. Lines with a circular cross section typically exhibit a relatively high noise and a relatively high drag on the machine with which such lines are used. Efforts have been made to configure trimmer lines to reduce both noise and drag. It is desirable to provide an improved trimmer line which reduces noise and/or drag, and improves other characteristics of the line when it is operated in a string trimmer machine.

### BRIEF DESCRIPTION OF THE DRAWINGS

Figure 1 is a perspective view illustrating a string trimmer machine of the type with which line of the present invention may be used;
Figure 2 is a top perspective diagrammatic view of a rotating string trimmer head of the type with which lines of the invention may be used;
Figure 3 is a cross sectional view of a line in accordance with an embodiment of the invention;
Figure 4 is a perspective view of a section of a line configured in accordance with an embodiment of the invention;
Figure 5 is a perspective view of a line having the same cross section as the one of Figure 4 and configured in accordance with a variation of the embodiment shown in Figure 4;
Figures 6 through 12 are cross sections of various embodiments of the invention;
Figure 13 is a partial diagrammatic perspective view of the embodiment shown in Figure 12;
Figure 14 is a perspective view of the embodiments shown in Figures 12 and 13 configured in accordance with a feature of the invention; and
Figures 15 through 44 are cross sections of string trimmer lines according to various embodiments of the invention.

### DETAILED DESCRIPTION

As used in the following specification and claims, the term string trimmer line refers to elongated line filaments used in string trimmer machines. The line filaments typically are in the form of extruded monofilament nylon or other equivalent materials.

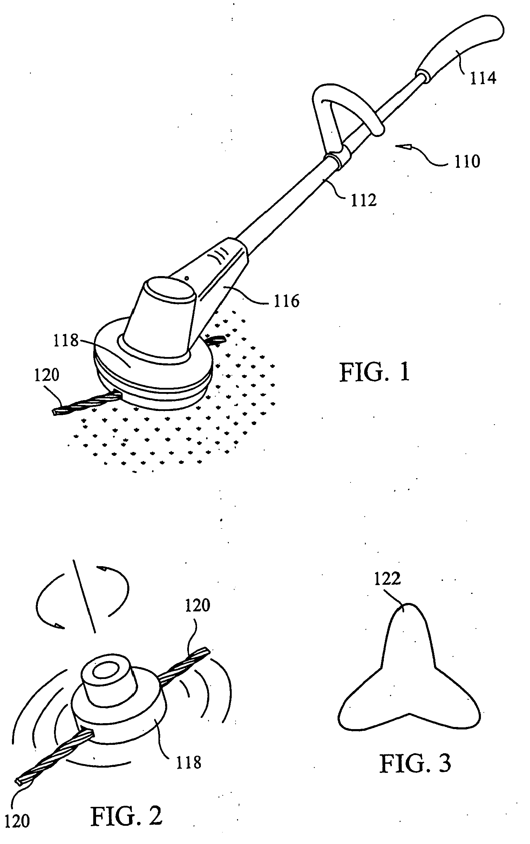

Reference now should be made to the drawings, in which the same reference numbers are used throughout the different figures to designate the same components. Figures 1 and 2 depict the general type of string trimmer machine with which embodiments of the invention are to be used. Such machines 110 typically include an elongated tubular portion 112 having an upper handle 114 and a lower motor 116. The machine 110 has an operating head 118, out of which a single length or pair of lengths (or more) of string trimmer line 120 extend.

The machine 110 which is shown in Figure 1 has a configuration generally used for electric string trimmers. When a gasoline powered string trimmer machine is used, the motor typically is located at the upper end 114 of the portion 112, and operates through a rotating shaft located within the portion 112 to rotate the head 118. In either event, the operation, so far as the trimmer line 120 is concerned, is the same. This operation generally is represented in Figure 2, where the head 118 is rotated continuously in a circular direction (as shown by the arrow) to spin the extended lengths of string trimmer line 120 for cutting vegetation.

Typically, the trimmer line 120 is made of extruded monofilament plastic or nylon line. Typical diameters of conventional circular cross-section range from 0.050" to 0.0155". The rotational speed of the heads used in trimmers of the type generally shown in Figure 1 are between 2,000 to 20,000 RPMs. The high speeds of operation of such machines result in a significant amount of noise produced by the spinning line itself; and the line also creates substantial drag on the drive motor of the machine.

In accordance with various embodiments of this invention, it has been found that rotated or twisted extrusions of the line such as the line 120, in various cross-sectional configurations as depicted variously in Figures 3 through 44 significantly improves the operating characteristics of machines using the line over the characteristics using the same line in a non-rotated or non-twisted form. All of the configurations of string trimmer line in Figures 3 to 44 have a plurality of elongated protruding lobes extending from the main body (the filament body) of the filament forming the line, where the lobes are in a pattern of rotation about the longitudinal axis of the filament body, with between 0.25 to 2.0 rotations per inch of the length of the filament body or string trimmer line.

Although various cross-sectional configurations are shown throughout the different figures of the drawings, whenever a line having any one of these cross-sectional configurations is constructed with a rotation or spiral configuration resulting in rotation of the protruding lobes of between 0.25 to 2.0 rotations per inch, every cross section of the line taken on planes perpendicular to the longitudinal axis of the main body portion of the line is the same; although the different cross sections are rotated relative to one another. Typically, the rotations form a rotating spiral pattern which varies continuously by a constant amount along the longitudinal axis of the filament body.

It also should be noted, in conjunction with the various figures 3 through 44, that reference to the filament body constitutes that portion of each of the various illustrated cross sections which lies within the center portion of those cross sections. Thus, the filament body may be considered to be the portion of string trimmer line defined by a circle with the center at the centroid of the line and having a radius to the nearest point on the outside perimeter of a cross section of the line perpendicular to the longitudinal axis of the line, excluding lines having cross-sectional shapes where a straight line drawn between adjacent extremities of the shape lies along the perimeter of the cross-sectional shape. For example, in conjunction with the cross section of the three-lobed line 122 shown in Figure 3, the filament body comprises a circle which touches the three innermost points where the protrusions of the three lobes contact one another. The filament body for the cross-sectional three-lobed configuration of line shown in Figure 3 also could be a triangular filament body which interconnects the three innermost points of the connections of each of the three lobes which are shown. In every case of all of the cross-sectional configurations shown for all of the various lines of Figures 3 through 44, the filament body, as generally defined above, has a longitudinal axis extending throughout the length of the trimmer line.

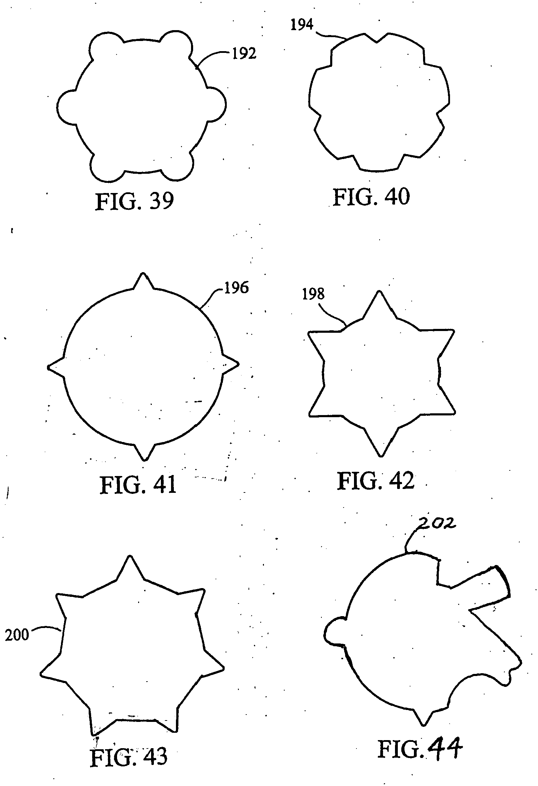

The filament body may be symmetrical in cross-sectional configuration, or it may be asymmetrical. This also is true of the lobes which are formed with or extend outwardly from the filament body; although in most commercial applications of the invention, the filament body and the lobes will be symmetrically arranged. Situations may arise, however, where asymmetrical configurations of either or both the filament body and the protruding lobes may be desirable. Such a configuration is shown in Figure 44.

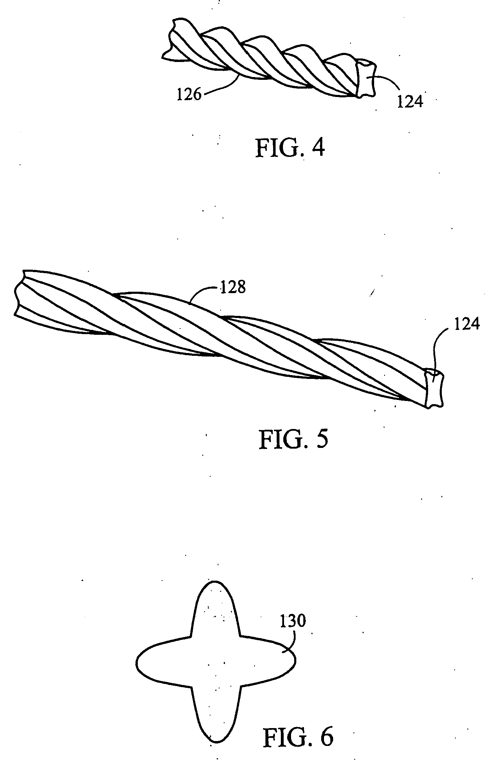

Figures 4 and 5 illustrate a line of a cross-sectional configuration 124 which includes four equi-angularly spaced lobes about the filament body of the line. In Figure 4, a relatively tight rotation or twist of the lobes about the central axis of the filament body is illustrated. This produces a relatively large number of bumps or nodes per unit length along a line extending parallel to the central axis of the line. In Figure 5, the same cross-sectional configuration of the line 124 is shown; but the rotation of the four lobes of the line is much less. Thus, the number of bumps or nodes 128 along a unit length of the line is less than the number of bumps, nodes or protrusions 126 along the same unit length of the line as shown in Figure 4.

As noted above, the number of twists or rotations of the line to produce the bumps or nodes per unit length of the line at its surface is established by twisting or rotating the line between .25 and 2.0 rotations per inch. Figure 5 illustrates the result of the lower range of such rotations, whereas Figure 4 illustrates the result of the greater amount of rotations per inch within this range or set of parameters.

It also should be readily apparent from a consideration of Figures 4 and 5 that the number of bumps or nodes which are experienced per unit length of the line increases as the number of protruding lobes in the line cross section increases from, for example, three lobes to some maximum number (typically twelve lobes appears to be at the upper range of the number of lobes which can be used on commercial string trimmer line applications). Twelve lobes will generate twenty-four bumps or nodes per inch at a twist level of two twists per inch.

It should be noted in conjunction with the ensuing description of the various line cross-sectional configurations that the different lines all are twisted or rotated in accordance with the illustrations of Figures 4 and 5 for the line cross section 124. The practical range of rotations or twists per inch is 0.25 to 2.0, as discussed above, to produce the ideal line characteristics for any given line cross section configuration. It has been found that with any cross-sectional configuration, the noise and drag of the line is higher for untwisted lines than it is for twisted lines. In addition to a reduction of noise and drag (not always in direct linear relationship with one another), lines which are configured with the various configurations of protruding lobes illustrated in Figures 3 through 44, also exhibit more stable cutting paths, that is there is less flutter at the line tip than occurs when untwisted lines having the same cross-sectional configuration are operated. It also appears that those twisted lines recover more quickly to a plane perpendicular to the drive shaft axis after being deflected by striking ground, grass, or other obstacles. This is advantageous when edging flower beds, golf course traps and the like. Borders with a straighter and cleaner cut are the result.

It also has been discovered that the rotated or twisted lines producing an alteration between high and low areas (peaks and valleys) parallel to the axis exhibit more aggressive cutting characteristics. This is believed to occur as a result of a sawing effect caused by the high and low, or peak and valley, configurations which result from rotating the lobes about the axis of the filament body during the manufacturing process while the line is still soft and before it hardens. The rotation may be effected in any suitable manner, and typically occurs by rotating the entire extrusion (filament body and lobes extruded simultaneously) about the axis of the body. Other methods, however, may be employed to obtain the end result which is diagrammatically illustrated in conjunction with the four-lobed cross-sectional configuration 124 in Figures 4 and 5. The same principles apply, however, for all of the other cross-sectional configurations which are illustrated in Figures 3 through 43.

Figure 6 illustrates a four-lobed line 130 which has a different cross-sectional configuration from the line 124 shown in Figures 4 and 5. The line of Figure 6, however, will exhibit the same general rotational or twist characteristics which are illustrated in Figures 4 and 5. It should be noted in conjunction with Figures 4 and 5, that the drawing is made diagrammatically in order to emphasize the nature of the different amount of twists occurring per,unit of length. In order to do this, what appear.to be sharp edges are illustrated; but it should be noted that from an examination of the cross section on the right-hand end of the line segments shown in Figures 4 and 5, the edges are rounded with a concave interconnecting configuration between the four different lobes of the line. Consequently, no sharp edges actually appear in a twisted line using the cross-sectional configuration 124. The drawing, however, clearly shows the difference in spacing between the bumps or peaks along a unit length of line between the peaks 126 for the more tightly rotated configuration of Figure 4 and the peaks 128 for the less tightly rotated configuration of Figure 5.

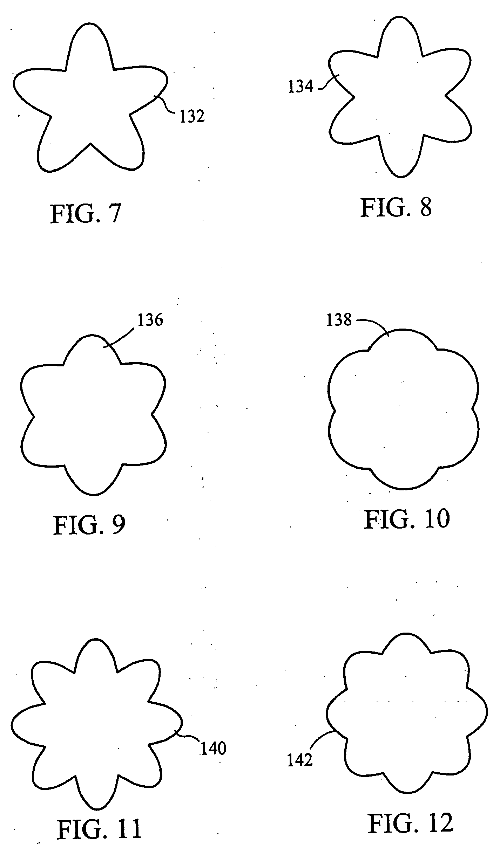

Figure 7 is similar to Figure 6, but illustrates a five-lobed, body 132, which has a rotational symmetry of five. Figure 8 is similar to Figure 7, with lobes of generally the same cross-sectional shape as those shown in Figure 7, but shows six lobes instead of five, for the cross-sectional configuration 134.

Figures 9 and 10 show six-lobed cross-sectional configurations 136 and 138 at the same overall spacing of the lobes shown in Figure 8. The cross-sectional configurations 136 and 138, however, have a larger internal filament body, with lobes which protrude radially from the filament body in lesser amounts than those shown in Figure 8. All of the various different lobe configurations and different numbers of lobes used on string trimmer line configurations in conjunction with the invention, may employ variations in the radial extensions of the lobes from to the main body portion, as illustrated particularly in conjunction with Figures 8,9 and 10 and the cross-sectional line configurations 134,136 and 138. The choice of configurations depends on the cutting characteristics which are desired (configurations such as Figure 8 will be more aggressive than the one shown in Figure 10, for example). The configuration of Figure 9 will provide cutting characteristics which lie between those of Figures 8 and 10.

It also is apparent from an examination of Figures 8,9 and 10 that the overall weight per unit length of the line of Figure 8 is less than that of the lines of Figures 9 and 10 of the same external diameter, with the line of Figure 10 constituting the heaviest cutting line per unit length. As is well known, the line weight per unit length also is a factor in establishing the cutting parameters for any given application of cutting lines.

Figures 11 and 12 show eight-lobed lines 140 and 142, respectively, with the lobes on the line cross section of Figure 11 extending radially outwardly from the main body of the filament by a greater percentage. The overall outer diameter, however, of the line segments 140 and 142 is the same.

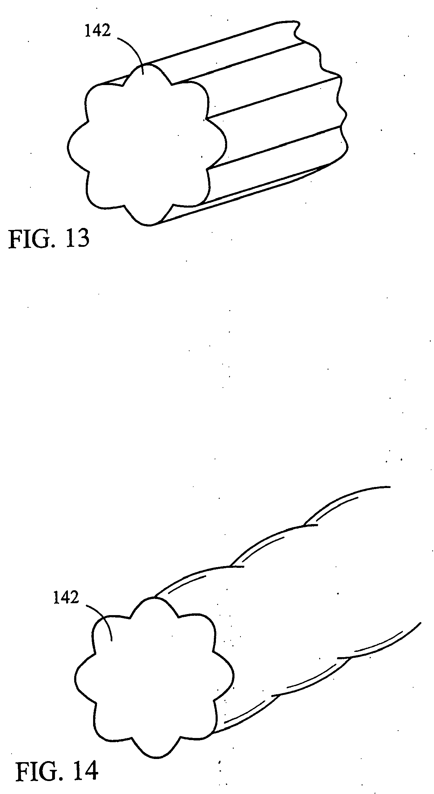

Figures 13- and 14 show the line having a cross-sectional configuration 142 of Figure 12 in an untwisted, elongated segment of Figure 13, and then in a twisted segment in Figure 14. Figure 14 illustrates the application of the invention to a line having a cross section of Figure 12 to depict it in a manner similar to the four-lobed line shown in Figures 4 and 5. The same principles which were explained above in detail in conjunction with Figures 4 and 5 apply equally as well to the line of Figures 12,13 and 14; so that a larger number of peaks or bumps occurs per unit length when a larger number of twists per inch are applied to the line than when a lower number of twists per inch are applied to the line. This is true of all of the line configurations which are illustrated in the various figures of the drawings.

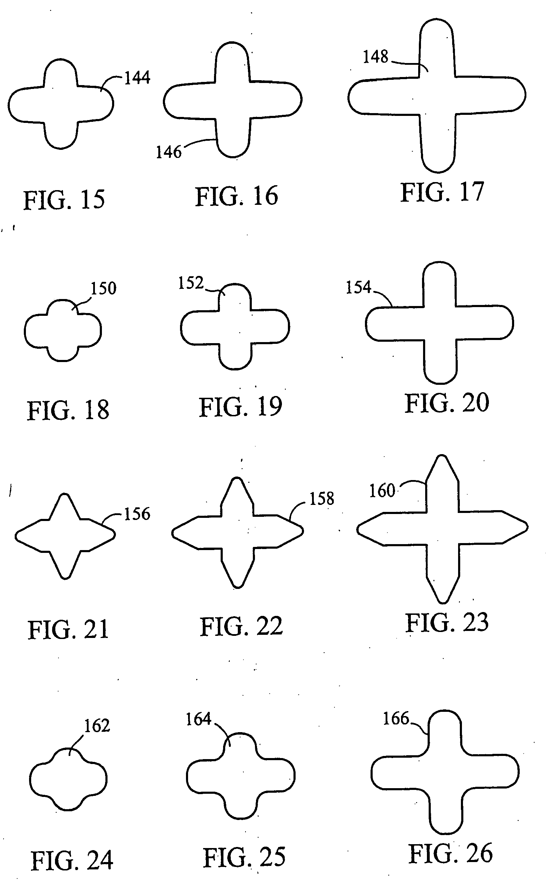

Figures 15 to 26 all show, by way of illustration and by no way in any effort to be limiting, various configurations which may take place for a four-lobed line, including different ratios of the width to thickness (aspect ratio) of the various lobes, as well as different proportions and interconnecting configurations of these lobes. Other variations besides the twelve which are shown in Figures 15 to 26 for four-lobed lines clearly also can be envisioned. This is true of all of the various line configurations which are illustrated in the different figures of the drawing.

For example, Figures 15,16 and 17 all are directed to lines in which the four different lobes are uniform in width (that is, the same) and extend outwardly from a central filament body portion which may be configured as either a square or a circle of the same dimensions for all three of the line cross sections 144,146 and 148. The difference between the lines 144,146 and 148 is in the radial extension of the different lobes. All four of the lobes on all four of the lines have the same base width; but the length of the lobes is the least (lower aspect ratio) in the line cross section 144 and greatest (higher aspect ratio) in the line cross section 148. The selection of one or the other of these line cross sections for any given application depends upon the nature of the application and the desires of the operator of the string trimmer machine to obtain the results required. The line of Figure 17, namely the line 148, will exhibit different noise and drag characteristics from the line 144, and the optimum characteristics for any given situation typically are empirically determined.

Figures 18,19 and 20 show line cross sections 150,152 and 154 similar to those of Figures 15,16 and 17, but with different relative protruding lobe relationships from the ones shown in Figures 15,16 and 17. Figures 24,25 and 26 are similar to Figures 18,19 and 20, but illustrate lines with protruding lobes 162,164 and 166, respectively, where concave interconnections between the different lobes, at the base of the lobe where they interconnect with the filament body, are employed. In the lines of Figures 15 to 20, the intersections of the different lobes are at a sharp right angle instead of the concave interconnections of the line cross sections 162,164 and 166.

Figures 21,22 and 23 illustrate four-lobed lines 156,158 and 160, respectively; but the lobes extend outwardly in a generally triangular tapered cross section, with a rounded end. Once again, these configurations are considered illustrative of a wide variety of different configurations which can be made of four-lobed lines (and by extension, to multi-lobed lines of any number of a plurality of lobes).

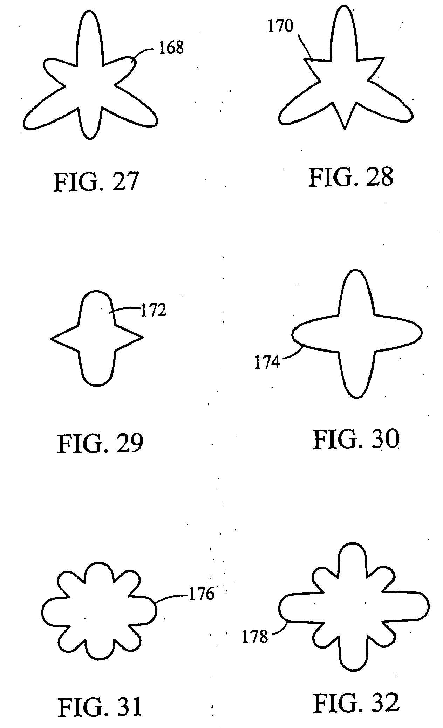

Figures 27 and 28 illustrate six-lobed lines 168 and 170, respectively, where three equi-angularly spaced radially longer lobes are interspersed with three equi-angularly spaced radially shorter lobes. In the line configuration 168, all of the lobes have a rounded outer edge; whereas the inner lobes of the line 170 of Figure 28 have a sharp edge. Once again, varying percentages of these different length lobes may be employed in accordance with the final desired operating characteristics for any given application of the line.

Figures 29 and 30 are directed to four-lobed lines 172 and 174, respectively. The line of Figure 29 has two relatively large rounded lobes spaced 180º apart on the filament body, with two shorter pointed lobes located 180º apart at 90º to the larger rounded lobes. Figure 30 is a configuration which is similar to that of Figures 17,20,23 and 26, but where the four equi-angularly spaced lobes are of a more triangular configuration than the lobes of Figures 17,20,23 and 26.

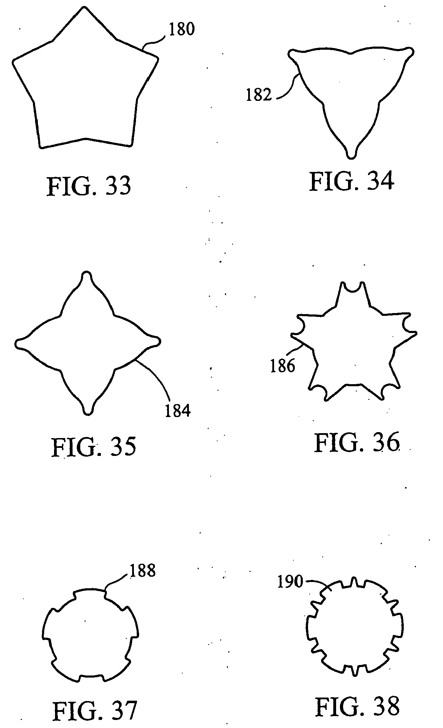

Figure 31 is directed to an eight-lobed cross-sectional configuration 176 where four of the lobes are of relatively wide rounded cross-sectional configuration interspersed with four lobes of a narrower rounded cross-sectional configuration, but where all of the lobes extend to the same outer circular configuration, or otherwise stated, are of the same length of extension from the filament body. Figure 32 shows a cross-sectional configuration 178 similar to the line 176 of Figure 31, but where the larger lobes extend radially outwardly from the filament body to a greater extent than the smaller lobes. In this respect, the embodiment of Figure 32 is similar in structural configuration to the six-lobed embodiment of Figure 27.

Figures 33,34 and 35 illustrate five-lobed, three-lobed and four-lobed cross-sectional configurations which further illustrate the very different shapes which may be utilized for the lobes extending outwardly from the filament body. In Figure 33, a five-lobed cross section 180 is shown, in which the filament body is relatively large compared to the lobes which in turn are of a generally triangular configuration joined together about the periphery of the filament body. Figure 34 shows a three-lobed configuration of a generally triangular shape, but which has slightly convex sides tapering down to a smaller rounded end to form the cross-sectional configuration 182. Again, the different lobes meet or are joined together at the periphery of the underlying filament body (formed by either an inner circle or a triangle interconnecting the points where the lobes touch one another). Figure 35 utilizes a lobe configuration for a four-lobed cross section 184 which is similar to that of the three-lobed embodiment 182 of Figure 34. Again, this is done for the purposes of illustration, since the same configuration shown for the cross section 182 and the cross section 184 may be employed for any number of cross-sectional configurations for lobes extending up to whatever practical amount may exist (typically, twelve being the upper limit for a string trimmer line).

Figures 36,37 and 38 all are directed to different embodiments, in which the extending or protruding lobes do not touch or intersect one another on the underlying filament body. In all three of these figures, the cross sections 186,188 and 190 show lobes which meet at an inner circular filament body, with a convex circular portion of the filament body clearly shown in each of Figures 36,37 and 38 between the various lobes.

The cross-sectional configuration 186 of Figure 36 is a five-lobed configuration, in which the basic lobe begins with the general shape for the cross section of the lobe of Figure 30, for example, but instead of extending out to a rounded extremity, each of the five lobes has a concave indentation in it in the ends to cause a total of ten smaller extremities to appear on the periphery of the five-lobed cross-sectional configuration 186 shown in Figure 36. This concave end may be employed with any of the various other configurations shown in Figures 3 through 43, if desired. It should be noted that between each of the lobes in cross-sectional configuration 186, there is a convex interconnection which is effected by the underlying filament body. This also is true of the cross-sectional configurations 188 and 190 of Figures 37 and 38.

In the configuration 188 of Figure 37, the lobes are terminated in a convex concentric configuration to the inner circle forming the filament body. This also is true of the six lobes of the cross-sectional configuration 190 which constitute the larger lobes; but in the embodiment of 190, each of these six larger lobes have a smaller, generally, triangularly shaped lobe extending between them outwardly from the filament body. Otherwise, the overall shape of the cross section 190 of Figure '38 is similar to the cross-sectional configuration 188 of Figure. 37.

Figures 39 and 40 illustrate trimmer line cross-sectional configurations 192 and 194 for six-lobed lines and seven-lobed lines, respectively, having different configurations from the six-lobed lines illustrated previously. In Figure 39, the lobes are equally angularly spaced from one another about the periphery of the underlying filament body, similar to the principles of the cross-sectional configurations 186,188 and 190 of Figures 36,37 and 38. In Figure 40, the lobes are in the general form of trapezoids and the cross-sectional configuration 194 again is illustrated to show the wide variety of shapes which can be employed with the invention.

Figure 41 is a four-lobed cross-sectional configuration 196, in which the filament body is a significant percentage of the overall cross section; and the lobes are small, somewhat triangularly shaped projections spaced at 90º about the periphery of the body. Figure 42 shows a six-lobed configuration 198 where the lobes are spaced apart about the circular periphery of the underlying filament body. The lobes assume a generally triangular configuration of the type similar to that shown for the cross section 196 of Figure 41, but the relative cross-sectional area of the lobes of the embodiment of Figure 42 is greater than that of the lobes of the embodiment of the cross section 196 of Figure 41.

Figure 43 illustrates a seven-lobed cross-sectional configuration 200, where again the lobes do not contact one another at the underlying filament body, but instead are spaced from one another about the periphery of the body. In Figure 43, however, the interconnection between the bases of each of the adjacent lobes is a straight line rather than a section of a circle, or a concave depression as in the case of the embodiment shown in Figures 4 and 5.

Figure 44 illustrates an asymmetrical cross-sectional configuration 202 with lobes of different shapes and sizes on the underlying filament body. Many variations of this configuration are possible.

It should be noted that the interconnections of the various lobes can take any of a number of different configurations. The lobes may meet one another at their bases at a relatively sharp angle, providing a crease or line along a finished length of rotated line. Alternatively, the lobes may meet at a concave interconnection of the type illustrated in Figures 24,25 and 26. Additionally, the lobes may be interconnected by means of convex or concave configurations interconnecting spaced-apart lobes, such as the types shown in the cross-sectional configurations of 192,196 and 198. It also may be desirable for some applications to employ flat interconnections between the different lobes, as illustrated with the cross-sectional configuration 200 of Figure 43.

In order to verify the effect of twisting various line configurations at varying twist levels, the following methods, equipment and procedures were developed:
■ Extrusion dies for the variety of shapes to be tested were fabricated so as to be able to produce lines of approximate equivalent mass to round 0.095" line.
■ Shaped lines were extruded, and equivalent mass (to 0.095" round) was determined by weighing 50' of line and adjusting the relative cross section so as to achieve approximately 80 gm weight for the 50 feet. This provided a basis for comparing equivalent sizes of all lines.
■ all shaped lines were then twisted and set at levels of 0.0, 0.50, 0.75, 1.00, and 1.5 twists per inch (TPI).
■ Twisted samples were then tested for noise and drag using a test machine designed and developed by Desert Extrusion to provide exact speed control up to 10,000 RPM. The machine is driven by a 1 hp AC/DC motor equipped with a speed control feedback system. The test machine also was designed with the capability of measuring the power (wattage) required to operate the motor along with the attached trimmer head and line samples at the controlled speed.
■ Noise levels were determined by placing a *Quest*™ Technologies Model 2700 impulse sound level meter at a precise location near the rotating line samples.
■ Line samples were placed in the fixed head attached to the motor drive system. The motor was then stepped to 5000, 6000, 7000, 8000, and 9000 rpm's. The two line ends extended 5" each from the head exit giving a total cut path of 14". (The motor was not of sufficient hp to provide a speed of 10,000 rpm for the 0.095" equivalent size). The noise level and power required was then recorded for each of the tested samples. In cases where there is no recorded data, either line flutter, or over power draw were the reason.
The following examples recorded in the graphs and tables designated Graph 1a and Graph 1b through Graph 5a and Graph 5b are representative of the results obtained for the variety of shapes and configurations studied. Both noise level and power required were reduced by twisting each configuration. This SUMMARY table below provides an insight as to the difference in power required to rotate the five shapes selected. Data for 1.5 TPI at 8000 rpm was selected for the comparison. Note that the lobes vary from three to seven and the lobe height varies as is depicted in Figures 3, 6, 40, 41 and 42.

### SUMMARY

| SHAPE | | ACTUAL (inches) | DIMENSIONS | RELATIVE (inches) | | POWER (watts) | COMPARATIVE RESULTS @ 8000 rpm 1.5 TPI | NOISE (dB) |
|---|---|---|---|---|---|---|---|---|
| | | | | | | | | |
| HEPTA-LOBAL (FIG. 40) | | 0.104" | | 0.099" | | 455 | | 102.5 |
| FOUR PEAKS (FIG. 41) | | 0.115" | | 0.104" | | 491 | | 103.4 |
| SIX PEAKS (FIG. 42) | | 0.100" | | 0.100" | | 502 | | 102.1 |
| QUADRA-LOBAL (FIG. 6) | | 0.127" | | 0.098" | | 584 | | 102.7 |
| TRI-LOBAL (FIG. 3) | | 0.140" | | 0.100" | | 597 | | 107.3 |

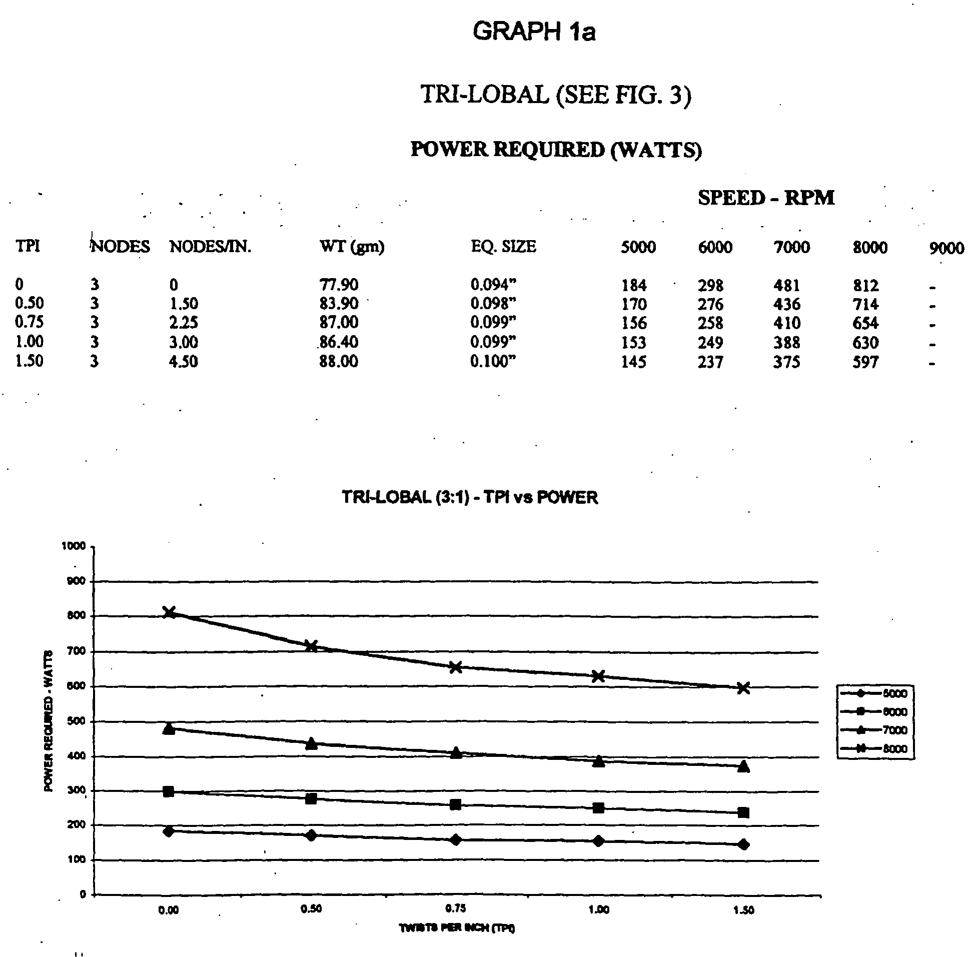

Graph 1a as well as Graphs 2a through 5a show power required to rotate the head and line undergoes a general gradual decline as twists per inch (TPI) increase. The higher the head speed, the greater the decline. Equilibrium appears to occur for the hgher speeds (those typical of commercial gasoline trimmers) from about 1.0 to 2.0 TPI. A family of curves is observed with decreasing slope (power reduction rate) as the head line speed is reduced from 8000 rpm to 5000 rpm.

The noise generated (see Graphs 1b through 5b) appear to decrease most rapidly at twist levels up to about 0.50 TPI. Some configurations tend to reach a noise minimum at 0.50 to 0.75 TPI and then begin to increase as the TPI increases, while others show a continued reduction in noise through 1.50 TPI with projected equilibrium at about 2.00 TPI. A similar family of curves is observed for the noise studies for all shapes tested.

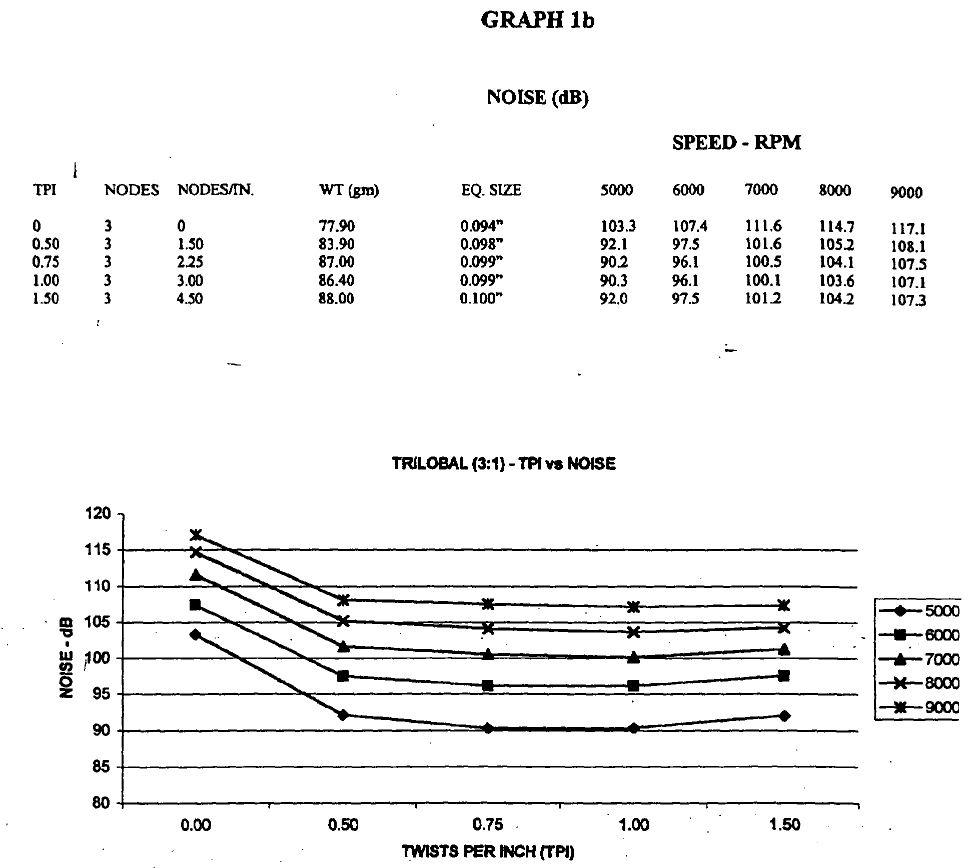

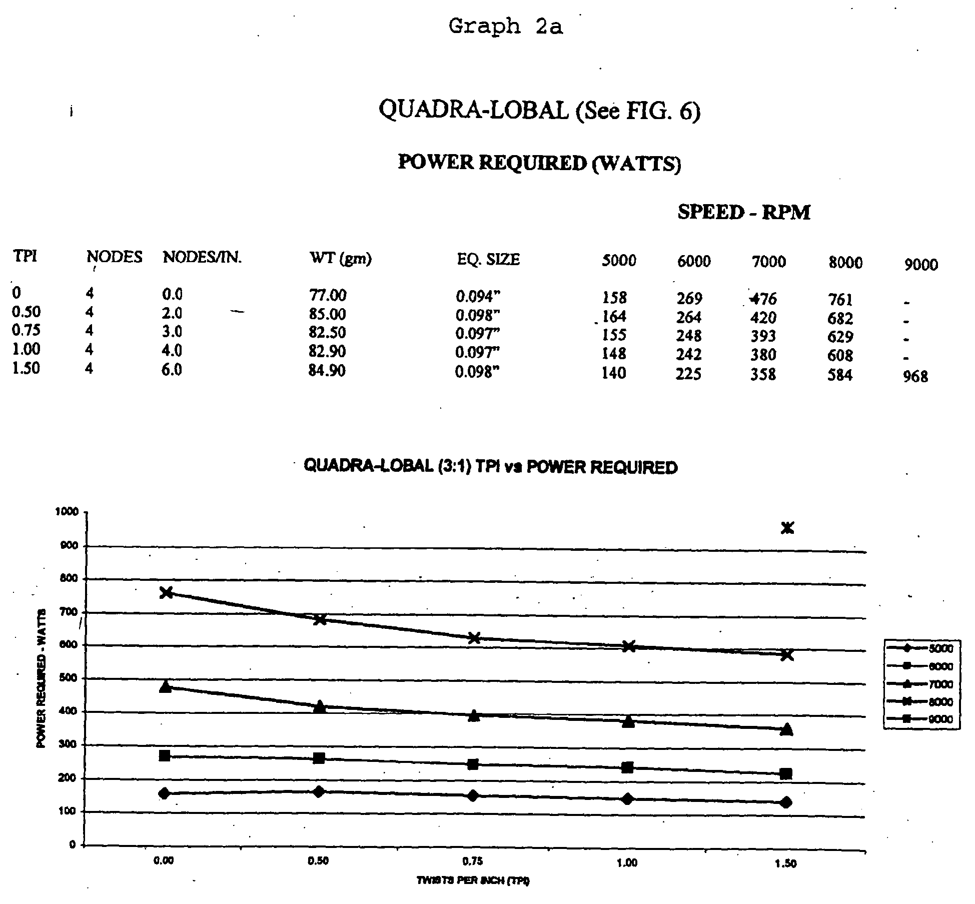

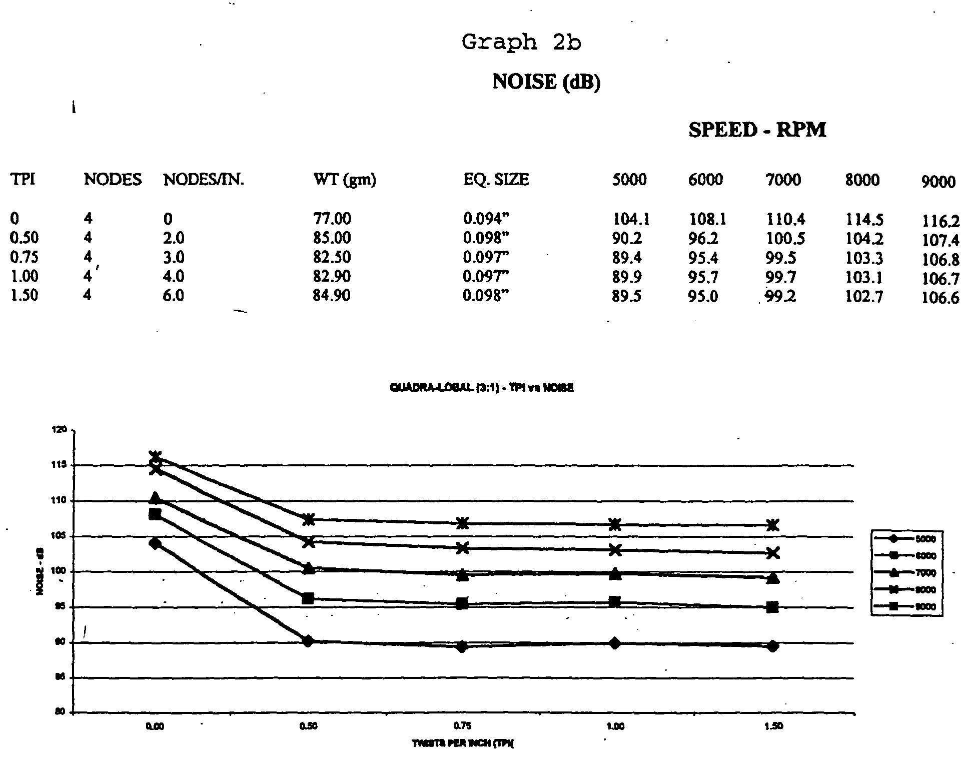

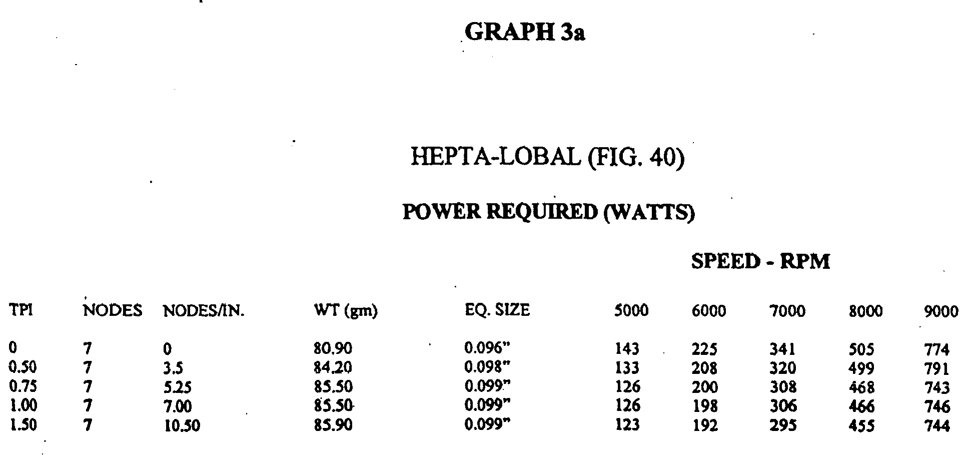

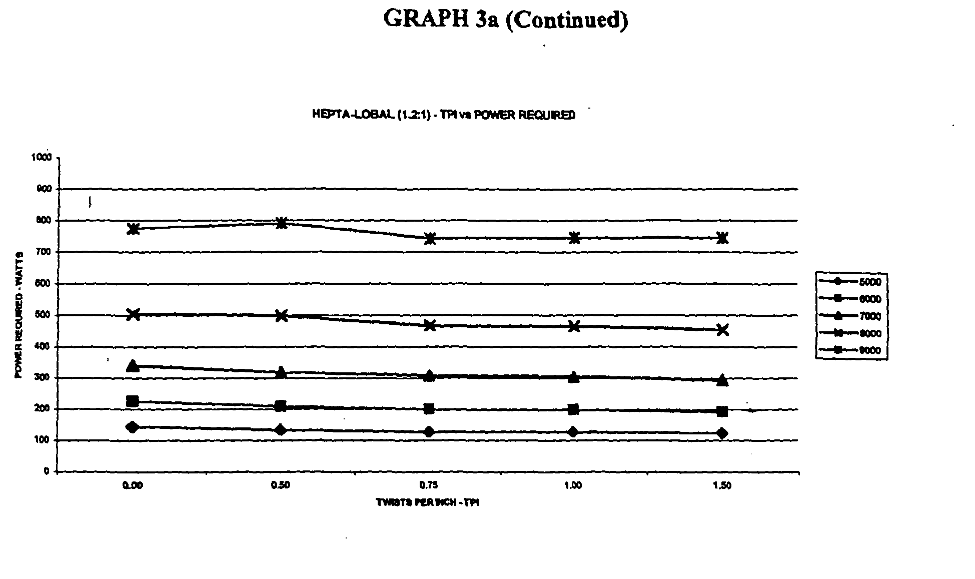

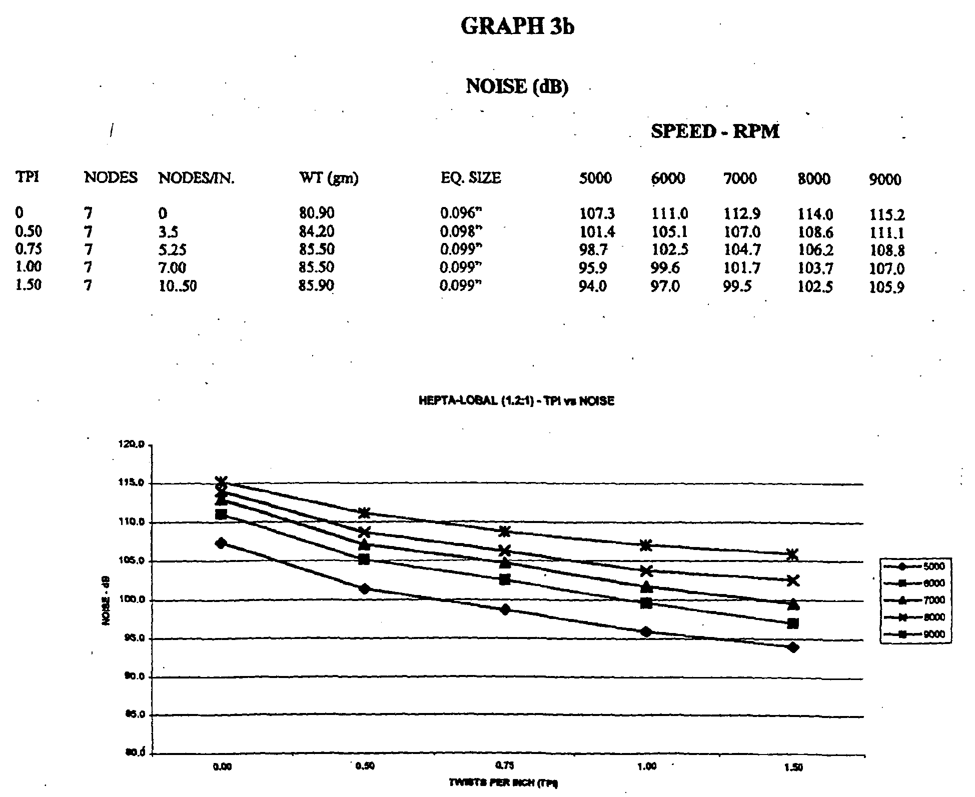

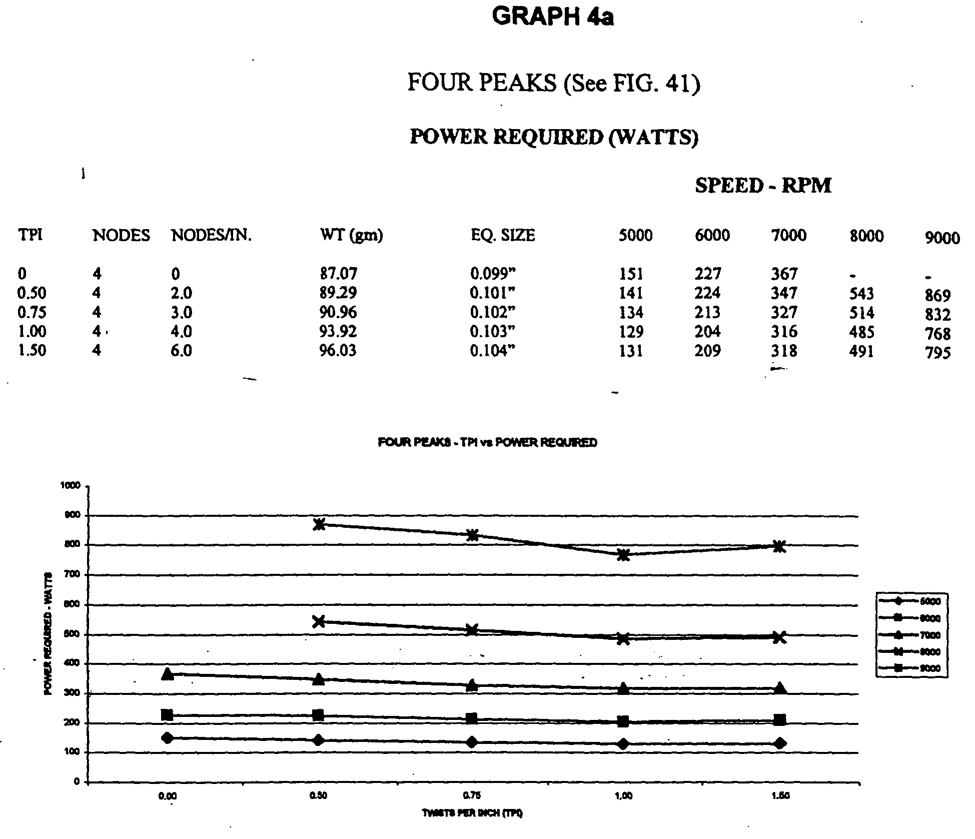

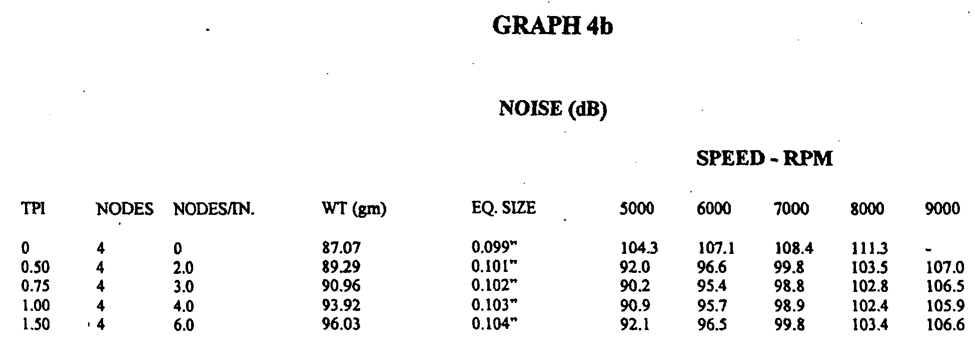

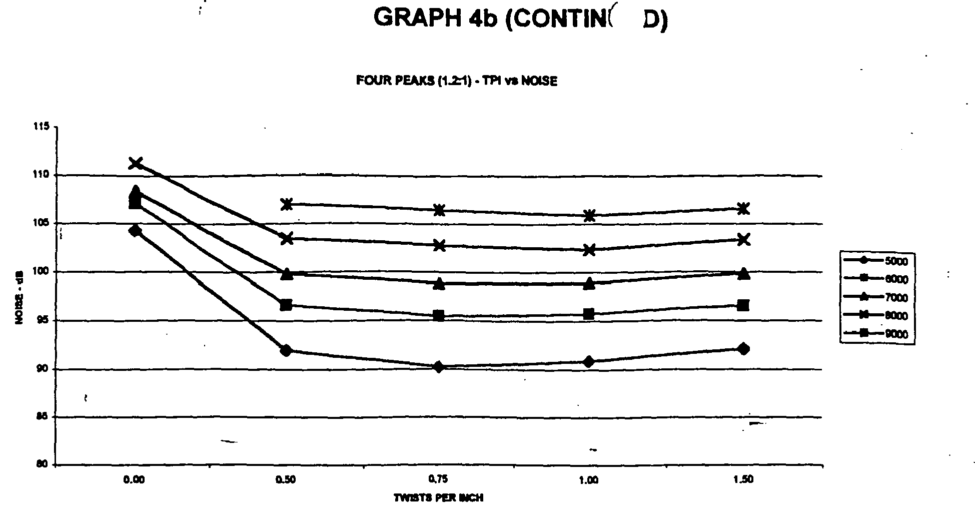

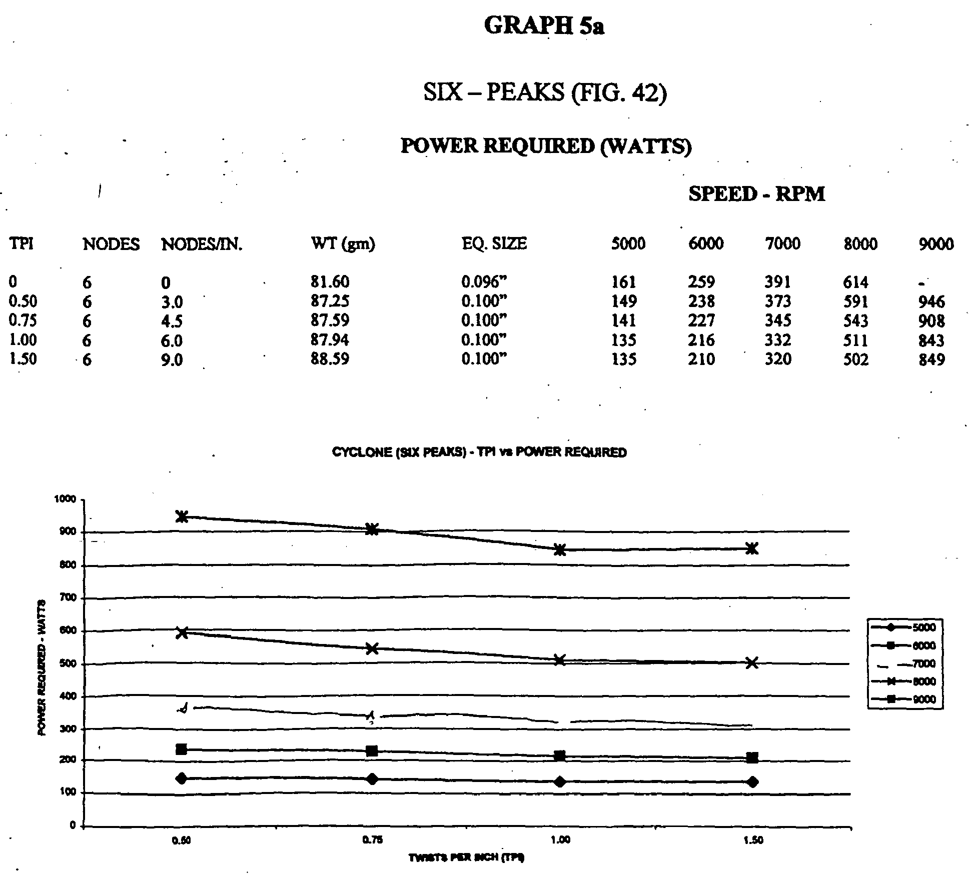

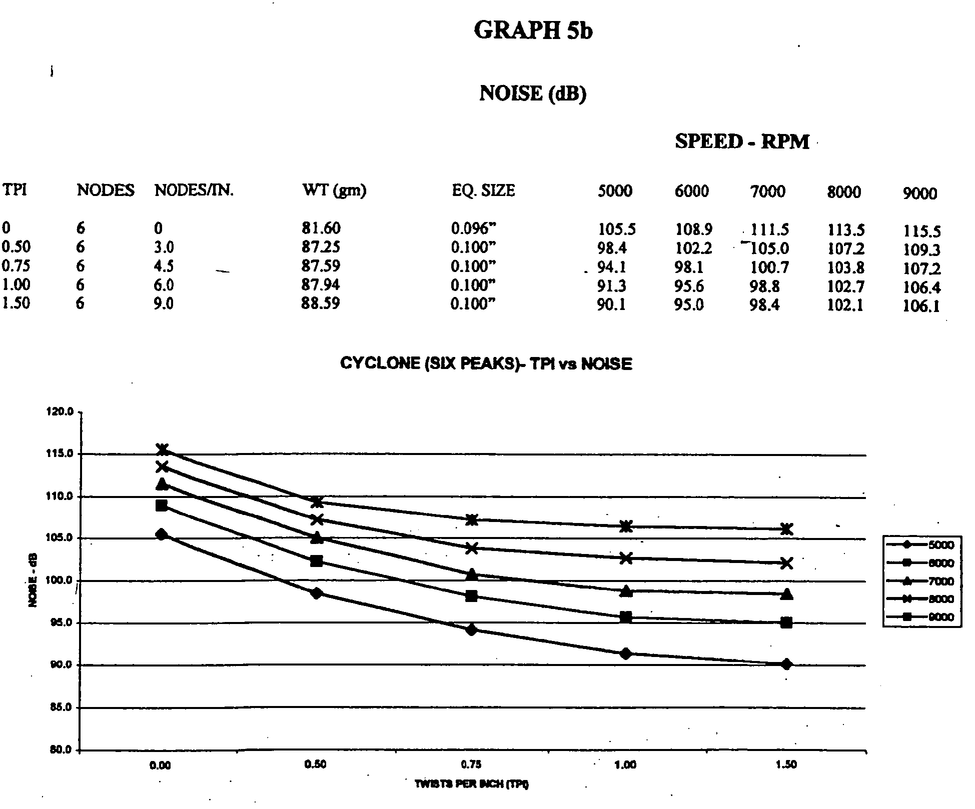

As has been previously noted, providing lines with lobes or extensions from the main body, which are subsequently twisted, provide a trimmer line with a "saw tooth" effect. It has been found that lines configured in such a way provide significant improvement in cutting vegetation such as vines, brambles, blackberry bushes and the like. As seen in the table below, the number of cutting teeth provided is dependent on the number of lobes or extensions' on the trimmer line, as well as the number of twists per inch.

**Nodes (teeth) per Inch**

| | **LOBES** | 3 | 4 | 5 | 6 | 7 | 8 | 9 | 10 |
|---|---|---|---|---|---|---|---|---|---|
| TPI | | | | | | | | | |
| 0.00 | | 0.00 | 0.00 | 0.00 | 0.00 | 0.00 | 0.00 | 0.00 | 0.00 |
| 0.25 | | 0.75 | 1.00 | 1.25 | 1.50 | 1.75 | 2.00 | 2.25 | 2.50 |
| 0.50 | | 1.50 | 2.00 | 2.50 | 3.00 | 3.50 | 4.00 | 4.50 | 5.00 |
| 0.75 | | 2.25 | 3.00 | 3.75 | 4.50 | 5.25 | 6.00 | 6.75 | 7.50 |
| 1.00 | | 3.00 | 4.00 | 5.00 | 6.00 | 7.00 | 8.00 | 9.00 | 10.00 |
| 1.25 | | 3.75 | 5.00 | 6.25 | 7.50 | 8.75 | 10.00 | 11.25 | 12.50 |
| 1.50 | | 4.50 | 6.00 | 7.50 | 9.00 | 10.50 | 12.00 | 13.50 | 15.00 |
| 1.75 | | 5.25 | 7.00 | 8.75 | 10.50 | 12.25 | 14.00 | 15.75 | 17.50 |
| 2.00 | | 6.00 | 8.00 | 10.00 | 12.00 | 14.00 | 16.00 | 18.00 | 20.00 |

After assembling, reviewing and interpreting the extensive data collected, tables were prepared for each of the 19 different line configurations. Values for aspect ratio (where applicable), size, weight of 50 feet of line, line equivalent sizes, lobes, twists per inch (TPI) and nodes per inch (NPI), along with power required in watts and noise generated in decibels (dB) were recorded at 5000, 6000, 7000, 8000 and 9000 rpm. Definitions or descriptions of terms used in these tables follow:
■ Aspect ratio - in many of the shapes, a series of ellipses was used to form the cross section. For example, a quadra-lobal shape was obtained by arranging two of the same elliptical elements at 90 degrees and centered in respect to each other (see Fig. 6). These ellipses are defined by their height to width ratio. Therefore, the aspect ratio (height/width) of the individual components was used to define the shape of the body and the lobes.
■ Size - this value, which is the actual dimensional size of the line cross section (even though it includes grooves or hollow places in many cases). It was determined by rotating a representative cross section of the line sample 360 degrees in a micrometer and recording the minimum and maximum dimensions in inches.
■ Weight (gm) per 50 ft.- A section of line was accurately cut to 50 feet and weighed to within a hundredth of a gram (gm).
■ Equivalent size - the line size calculated by comparing the mass of the specific shape of line under consideration to the size of a round line that would yield the same weight for the 50 feet. The equivalent size is therefore the diameter of a round line of equivalent unit mass.
■ Lobes - Extensions or protrusions from the main body.
■ TPI - Twists per inch, or the number of revolutions per inch that the line is subjected to in the twisting process.
■ Nodes per inch (NPI) - The number of bumps or "teeth" along the length of the line. This is determined by multiplying the number of twists per inch (TPI) by the number of lobes on the subject line.
■ Head speed - The rate of rotation of the fixture (head) which holds and retains the line being tested normally expressed in revolutions per minute (rpm).

In Tables 1 and 2 below, it is shown that all shapes,when twisted, show improvements in both noise generated and power required when compared to the untwisted version of the same line. For example at 5000 rpm (usually the minimum trimmer head operating speed), noise levels were reduced by up to 17.7 dB. In the case of each twisted line shape tested, the noise level at 5000 rpm was less than 94.0 dB, while the untwisted shapes ranged from a high of 107.9 dB to a low for the tri-lobal of 103.3 dB. Also it should be noted that the lowest round control was 103.4 dB.

**TABLE 1**

| DESERT EXTRUSION SHAPE - EFFECT ON NOISE @ VARIOUS TWIST LEVELS NOISE-dB | | | | | | | | | | | | | |
|---|---|---|---|---|---|---|---|---|---|---|---|---|---|
| | | | | | | | | | HEAD SPEED | | | | |
| LINE SHAPE | ASPECT RATIO | SIZE INCHES | WT. Gm 50 ft | EQUIV. SIZE (in.) | NODES | TPI | NODES PER INCH | | 5000 | 6000 | RPM 7000 | 8000 | 9000 |
| (NO FIG. SHOWN) | | | | | | | | | | | | | |
| ROUND-CONTROL 2 | 1 | 0.100 | 88.27 | 0.100 | 0 | 0 | 0 | | 103.4 | 107.7 | 110.4 | 112.5 | 114.6 |
| ROUND. CONTROL 3 | 1 | 0.095 | 80.1 | 0.096 | 0 | 0 | 0 | | 104.1 | 107.8 | 110.1 | 112.1 | 114.5 |
| (NO FIG. SHOWN) | | | | | | | | | | | | | |
| BI-LOBAL - 0 | 1.43 to 1 | 0.111 | 76.20 | 0.093 | 2 | 0.00 | 0.0 | | 104.3 | 108.5 | 111.4 | 113.3 | 104.4 |
| BI-LOBAL-1.0 | 1.43 to 1 | 0.117 | 81.30 | 0.096 | 2 | 1.00 | 2.0 | | 87.7 | 92.9 | 96.8 | 100.3 | 114.9 |
| IMPROVEMENT-dB (SEE FIG. 3) | | | | | | | | | 16.6 | 15.6 | 14.6 | 13.0 | 10.5 |
| TRI-LOBAL-0 | 3 to 1 | 0.110-0.125 | 77.90 | 0.094 | 3 | 0.00 | 0.0 | | 103.3 | 107.4 | 111.6 | 114.7 | 117.1 |
| TRI-LOBAL - 1.00 | 3 to 1 | 0.142 | 86.40 | 0.099 | 3 | 1.00 | 3.0 | | 90.3 | 96.1 | 100.1 | 103.6 | 107.1 |
| IMPROVEMENT-dB (SEE FIG. 6) | | | | | | | | | 13.0 | 11.3 | 11.5 | 11.1 | 10.0 |
| QUADRA-LOBAL - 0 | 3 to 1 | 0.094-0.125 | 77.00 | 0.094 | 4 | 0.00 | 0.0 | | 104.1 | 108.1 | 110.4 | 114.5 | 116.2 |
| QUADRA-LOBAL-1.50 | 3 to 1 | 0.127 | 84.90 | 0.098 | 4 | 1.50 | 6.0 | | 89.5 | 95.0 | 99.2 | 102.7 | 106.6 |
| IMPROVEMEMT-dB (SEE FIG. 7) | | | | | | | | | 14.8 | 13.1 | 11.2 | 11.8 | 9.6 |
| PENTA-LOBAL - 0 | 3 to 1 | 0.110-0.118 | 82.70 | 0.097 | 5 | 0.00 | 0.0 | | 104.9 | 110.8 | 113.4 | 115.2 | 116.2 |
| PENTAL-LOBAL-0.75 | 3 to 1 | 0.124 | 89.00 | 0.101 | 5 | 0.75 | 3.8 | | 90.2 | 96.0 | 99.9 | 103.5 | 106.6 |
| IMPROVEMENT-dB (SEE FIG.10). | | | | | | | | | 14.7 | 14.8 | 13.5 | 11.7 | 9.6 |
| HEXA-LOBAL-0 | 2 to 1 | 0.093-0.101 | 80.84 | 0.096 | 6 | 0.00 | 0.0 | | 105.5 | 109.2 | 111.2 | 112.6 | 114.3 |
| HEXA-LOBAL-1.50 | 2 to 1 | 0.105 | 86.51 | 0.099 | 6 | 1.50 | 9.0 | | 90.2 | 94.6 | 98.0 | 101.2 | 105.2 |
| IMPROVEMENT-dB (SEE FIG. 9) | | | | | | | | | 15.3 | 14.6 | 13.2 | 11.4 | 9.1 |
| HEXA-LOBAL-0 | 3 to 1 | 0.101-0.111 | 79.64 | 0.095 | 6 | 0.00 | 0.0 | | 104.4 | 93.3 | 111.0 | 100.4 | 115.4 |
| HEXA-LOBAL-1.50 | 3 to 1 | 0.111-0.113 | 83.92 | 0.098 | | 1.50 | 0.0 | | 87.9 | 108.3 | 97.0 | 113.0 | 104.6 |
| IMPROVEMENT-dB (SEE FIG. 8) | | | | | | | | | 16.6 | 15.0 | 14.0 | 12.6 | 10.8 |
| HEXA-LOBAL-0 | 4 to 1 | 0.106-0.119 | 82.40 | 0.097 | 6 | 0.00 | 0.0 | | 103.5 | 107.2 | 109.7 | 111.6 | 113.5 |
| HEXA-LOBAL-1.50 | 4 to 1 | 0.120-0.120 | 85.00 | 0.098 | 6 | 1.50 | 9.0 | | 88.4 | 94.2 | 98.3 | 101.8 | 106.1 |
| IMPROVEMENT-dB (NOT SHOWN) | | | | | | | | | 15.1 | 13.0 | 11.4 | 10.0 | 7.4 |
| OCTA-LOBAL-0 | 2 to 1 | 0.095-0.100 | 80.55 | 0.096 | 8 | 0.00 | 0.0 | | 107.9 | 110.5 | 112.3 | 113.8 | 115.3 |
| OCTA-LOBAL-0.75 | 2 to 1 | 0.099 | 83.05 | 0.097 | 8 | 0.75 | 6.0 | | 102.5 | 106.4 | 108.3 | 110.0 | 111.9 |
| IMPROVEMENT-dB (SEE FIG. 12) | | | | | | | | | 5.4 | 4.1 | 4.0 | 3.8 | 3.4 |
| OCTA-LOBAL - 0 | 3 to 1 | 0.096-0.108 | 80.97 | 0.096 | 8 | 0.00 | 0.0 | | 105.5 | 107.4 | 109.4 | 111.4 | 113.5 |
| OCTA-LOBAL - 1.50 | 3 to 1 | 0.111 | 85.41 | 0.098 | 8 | 1.50 | 12.0 | | 90.3 | 94.4 | 98.1 | 101.3 | 105.3 |
| IMPROVEMENT-dB (SEE FIG. 11) | | | | | | | | | 15.2 | 13.0 | 11.3 | 10.1 | 8.2 |
| OCTA-LOBAL-0 | 4 to 1 | 0.106-0.114 | 82.40 | 0.097 | 8 | 0.00 | 0.0 | | 103.8 | 106.7 | 108.6 | 111.7 | 114.1 |
| OCTA-LOBAL - 1.50 | 4 to 1 | 0.114 | 87.92 | 0.100 | 8 | 1.50 | 12.0 | | 91.1 | 95.5 | 98.7 | 101.6 | 105.6 |
| IMPROVEMENT-dB (SEE FIG. 40) | | | | | | | | | 12.7 | 11.2 | 9.9 | 10.1 | 8.5 |
| HEPTA-LOBAL-0 | | 0.093-0.102 | 80.90 | 0.096 | 7 | 0.00 | 0.0 | | 107.3 | 111.0 | 112.9 | 114.0 | 115.2 |
| HEPTA-LOBAL-1.50 | | 0.104 | 85.90 | 0.099 | 7 | 1.50 | 10.5 | | 94.0 | 97.0 | 99.5 | 102.5 | 105.9 |
| IMPROVEMENT-dB | | | | | | | | | 13.3 | 14.0 | 13.4 | 11.5 | 9.3 |
| (NOT SHOWN) | | | | | | | | | | | | | |
| SQUARE-0 | | 0.089-0.092 | 84.04 | 0.098 | 4 | 0.00 | 0.0 | | 103.5 | 107.8 | 110.4 | 112.1 | 113.5 |
| SQUARE-0.50 | | 0.114-0.117 | 89.61 | 0.101 | 4 | 0.50 | 2.0 | | 90.8 | 95.7 | 99.6 | 102.8 | 106.5 |
| IMPROVEMENT-dB | | | | | | | | | 12.7 | 12.1 | 10.8 | 9.3 | 7.0 |
| (SEE FIG. 41) | | | | | | | | | | | | | |
| FOUR PEAKS - 0 | | 0.095-0.115 | 87.07 | 0.099 | 4 | 0.00 | 0.0 | | 104.3 | 107.1 | 108.4 | 111.3 | |
| FOUR PEAKS-1.00 | | 0.114-0.115 | 93.92 | 0.103 | 4 | 1.00 | 4.0 | | 90.9 | 95.7 | 98.9 | 102.4 | 105.9 |
| IMPROVEMENT-dB | | | | | | | | | 13.4 | 11.4 | 9.5 | 8.9 | |
| (SEE FIG. 42) | | | | | | | | | | | | | |
| SIX PEAKS - 0 | | 0.095-0.109 | 81.60 | 0.096 | | 0.00 | 0.0 | | 105.5 | 108.9 | 111.5 | 113.5 | 115.5 |
| SIX. PEAKS - 1.50 | | 0.110 | 88.59 | 0.100 | 6 | 1.50 | 9.0 | | 90.1 | 95.0 | 98.4 | 102.1 | 106.1 |
| IMPROVEMENT-dB | | , | | | | | | | 15.4 | 13.9 | 13.1 | 11.4 | 9.7 |
| (SEE FIG. 36) | | | | | | | | | | | | | |
| CMD-TRUN-STAR-0 | | 0.100-0.105 | 79.19 | 0.095 | 5 | 0.00 | 0.0 | | 107.8 | 108.2 | 110.3 | 111.8 | 114.0 |
| CMD-TRUN-STAR-1.50 | | 0.107-0.107 | 89.97 | 0.100 | 5 | 1.50 | 7.5 | | 90.1 | 95.3 | 98.9 | 101.7 | 105.5 |
| IMPROVEMENT-dB | | | | | | | | | 17.7 | 12.9 | 11.4 | 10.1 | 8.5 |
| (NOT SHOWN) | | | | | | | | | | | | | |
| SCORPIAN - 0 | | 0.106-0.113 | 86.72 | 0.099 | 3 | 0 | 0.0 | | 104.6 | 110 | 114 | 116.3 | 117.6 |
| SCORPIAN -1.00 | | 0.120-0.125 | 89.40 | 0.101 | 3 | 1.00 | 3.0 | | 90 | 95.2 | 98.8 | 102.3 | 105.9 |
| IMPROVEMENT-dB | | | | | | | | | 14.6 | 14.8 | 15.2 | 14.0 | 11.7 |
| (SEE FIG.28) | | | | | | | | | | | | | |
| TRI-LOBAL PLUS - 0 | | 0.109-0.117 | 78.60 | 0.094 | 3 | 0 | 0.0 | | 105.6 | 109.2 | 113.0 | 115.8 | 116.8 |
| TRI-LOBAL PLUS - 1.00 | | 0.128-0.133 | 83.71 | 0.098 | 3 | 1.00 | 3.0 | | 89.4 | 95.0 | 99.0 | 102.7 | 105.8 |
| IMPROVEMENT-dB(NOT SHOWN) | | | | | | | | | 16.2 | 14.2 | 14.0 | 13.1 | 11.0 |
| QUAD-LOBAL PLUS-0 | | 0.094-0.118 | 79.48 | 0.095 | 4 | 0 | 0.0 | | 103.6 | 107.3 | 110.6 | 112.8 | 114.8 |
| QUAD-LOBAL PLUS-1.50 | | 0.118-0.119 | 86.58 | 0.099 | 4 | 1.50 | 6.0 | | 89.0 | 94.1 | 97.8 | 101.5 | 105.8 |
| IMPROVEMENT-dB (NOT SHOWN) | | | | | | | | | 14.6 | 13.2 | 12.8 | 11.3 | 9.0 |
| STAR-FULL MASS-0 | | 0.115-0.120 | 75.83 | 0.093 | 5 | 0 | 0.0 | | 104.6 | 108.6 | 109.9 | 111.7 | 112.3 |
| STAR - FULL MASS-1.5 | | 0.125 | 84.23 | 0.098 | 5 | 0 | 7.5 | | 88.2 | 94 | 97.9 | 101.5 | 105.1 |
| IMPROVEMENT -dB | | | | | | | | | 16.4 | 14.6 | 12.0 | 10.2 | 7.2 |

Table 2 (below) summarizes the power required to rotate the various line configurations at speeds ranging from 5000 rpm to 9000 rpm. It should be noted that twisting reduces the power required (drag) by up to 30.4 for the star line (full-massed) at 5000 rpm and 31.5% for the bi-lobal line at 8000 rpm. Other shapes when twisted result in reductions of varying amounts at different rpms. As indicated in Tables 1 and 2, the most effective twist level (TPI) was chosen for each sample shape indicated. Each shape was tested at 0.50, 0.75, 1.00 and 1.50 twists per inch (TPI). It can be seen by reviewing the column TPI that the best results, dependent upon shape, were obtained at twist levels ranging from 0.50 to 1.50 TPI under the conditions studied. We therefore conclude that by twisting any shape from 0.25 to 2.00 an optimum twist level will be found for either/or noise and power reduction, as well as cutting performance. The final row for each sample in Table 2 entitled "REDUCTION-%" gives values for % reduction of power required to rotate the head and line when compared to the untwisted version of the same line.

**TABLES 2**

| DESERT EXTRUSIONSHAPE - EFFECT ON POWER @ VARIOUS TWIST LEVELS POWER REQUIRED - WATTS | | | | | | | | | | | | | |
|---|---|---|---|---|---|---|---|---|---|---|---|---|---|
| | | | | | | | | | HEAD SPEED | | | | |
| LINE SHAPE | (ASPECT) RATIO | SIZE INCHES | WT. Gm 50 ft | EQUIV. SIZE (in.) | NODES | TPI | NODES PER INCH | | 5000 | 6000 | RPM 7000 | 8000 | 9000 |
| (NO FIG. SHOWN) | | | | | | | | | | | | | |
| ROUND - CONTROL 2 | 1 | 0.100 | 88.27 | 0.100 | 0 | 0 | 0 | | 120 | 191 | 295 | 449 | 719 |
| ROUND - CONTROL 3 | 1 | 0.095 | 80.1 | 0.096 | 0 | 0 | 0 | | 123 | 195 | 303 | 469 | 762 |
| (NO FIG. SHOWN) | | | | | | | | | | | | | |
| BI-LOBAL-0 | 1.43 to 1 | 0.111 | 76.20 | 0.093 | 2 | 0.00 | 0.0 | | 146 | 237 | 368 | 577 | 940 |
| BI-LOBALI-0.75 | 1.43 to 1 | 0.116 | 79.50 | 0.095 | 2 | 0.75 | 1.5 | | 112 | 171 | 260 | 395 | 618 |
| REDUCTION-% (SEE FIG. 3) | | | | | | | | | -23.3 | -27.8 | -29.3 | -31.5 | -34.3 |
| TRI-LOBAL - 0 | 3 to 1 | 0.110-0.125 | 77.90 | 0.094 | 3 | 0.00 | 0.0 | | 184 | 298 | 481 | 812 | |
| TRI-LOBAL - -1.50 | 3 to 1 | 0.140 | 88.00 | 0.100 | 3 | 1.50 | 4.5 | | 145 | 237 | 375 | 597 | |
| REDUCTION-% (SEE FIG. 6) | | | | | | | | | -21.2 | -20.5 | -22.0 | -26.5 | |
| QUADRA-LOBAL - 0 | 3 to 1 | 0.094-0.125 | 77.00 | 0.094 | 4 | 0.00 | 0.0 | | 158 | 269 | 476 | 761 | |
| QUADRA.LOBAL-1.50 | 3 to 1 | 0.127 | 84.90 | 0.098 | 4 | 1.50 | 6.0 | | 140 | 225 | 358 | 584 | 968 |
| REDUCTION-% (SEE FIG.7) | | | | | | | | | -11.39 | -16.36 | -24.79 | -23.26 | |
| PENTA-LOBAL - 0 | 3 to 1 | 0.110-0.118 | 82-70 | 0.097. | 5 | 0.00 | 0.0 | | 174 | 316 | 475 | 740 | |
| PENTA-LOBAL-0.50 | 3 to 1 | 0.124 | 89.00 | 0.101 | 5 | 0.75 | .3.8 | | 166 | 266 | 412 | 647 | |
| REDUCTION (INCREASE) (SEE FIG.8) | | | | | | | | | -4.6 | -15.8 | -13.3 | -12.6 | |
| HEXA-LOBAL-0 | 2 to 1 | 0.093-0.101 | 80.84 | 0.096 | 6 | 0.00 | 0.0 | | 135 | 214 | 323 | 488 | 767 |
| HEXA-LOBAL - 1.50 | 2 to | 0.105 | 86.51 | 0.099 | 6 | 1.50 | 9.0 | | 120 | 189 | 290 | 439 | 708 |
| REDUCTION-% (SEE FIG. 9) | | | | | | | | | -11.11 | -11.68 | -10.22 | -10.0 | -7.69 |
| HEXA-LOBAL - 0 | 3 to 1 | 0.101-0.111 | 79.64 | 0.095 | 6 | 0.00 | 0.0 | | 155 | 249 | 380 | 622 | |
| HEXA-LOBAL - 1.50 | 3 to 1 | 0.111-0.113 | 83.92 | 0.098 | 6 | 1.50 | 9.0 | | 121 | 192 | 295 | 454 | 737 |
| REDUCTION-% (SEE FIG.10) | | | | | | | | | -21.9 | -22.9 | -224 | -27.0 | |
| HEXA-LOBAL - 0 | 4 to 1 | 0.106-0.119 | 82.40 | 0.097 | 6 | 0.00 | 0.0 | | 176 | 276 | 423 | 689 | |
| HEXA-LOBAL- 1.50 | 4 to 1 | 0.120-0.120 | 85.00 | 0.098 | 6 | 1.50 | 9.0 | | 137 | 221 | 342 | 552 | 939 |
| REDUCTION-% (SEE FIG. 11) | | | | | | | | | -22.16 | -19.93 | -18.15 | -19.88 | |
| OCTA-LOBAL-0 | 2 to 1 | 0.095-0.100 | 80.55 | 0.096 | 8 | 0.00 | 0.0 | | 142 | 225 | 340 | 524 | 817 |
| OCTA-LOBAL-1.50 | 2 to 1 | 0.100 | 84.27 | 0.098 | 8 | 1.50 | 12.0 | | 132 | 208 | 320 | 489 | 780 |
| REDUCTION-% (SEE FIG.12) | | | | | | | | | -7.0 | -7.6 | -5.9 | -6.7 | -4.5 |
| OCTA-LOBAL - 0 | 3 to 1 | 0.096-0.108 | 80.97 | 0.096 | 8 | 0.00 | 0.0 | | 155 | 226 | 344 | 531 | 853 |
| OCTA-LOBAL-1.50 | 3 to 1 | 0.111 | 85.41 | 0.098 | 8 | 1.50 | 12.0 | | 127 | 201 | 309 | 470 | 761 |
| REDUCTION-% (NOT SHOWN) | | | | | | | | | -18.1 | -11.1 | -10.2 | -11.5 | -10.8 |
| OCTA-LOBAL- 0 | 4 to 1 | 0.106-0.114 | 82.40 | 0.097 | 8 | 0.00 | 0.0 | | 145 | 226 | 348 | 586 | |
| OCTA-LOBAL - 1.50 | 4 to 1 | 0.114 | 87.92 | 0.100 | 8 | 1.50 | 12.0 | | 127 | 199 | 310 | 473 | 788 |
| REDUCTION-% | | | | | | | | | -12.41 | -11.95 | -10.92 | -19.28 | |
| (SEE FIG. 40) | | | | | | | | | | | | | |
| HEPTA-LOBAL-0 | | 0.093-0.102 | 80.90 | 0.096 | 7 | 0.00 | 0.0 | | 143 | 225 | 341 | 505 | 774 |
| HEPTA-LOBAL - 0.75 | | 0.101-0.104 | 85.50 | 0.099 | 7 | 0.75 | 5.3 | | 126 | 200 | 308 | 468 | 743 |
| REDUCTION-% | | | | | | | | | -11.9 | -11.1 | -9.7 | -7.3 | -4.0 |
| (NOT SHOWN) | | | | | | | | | | | | | |
| SQUARE - 0 | | 0.089-0.092 | 84.04 | 0.098 | 4 | 0.00 | 0.0 | | 156 | 248 | 373 | 566 | |
| SQUARE-1.50 | | 0.118-0.119 | 92.21 | 0.102 | 4 | 1.50 | 6.0 | | 135 | 219 | 341 | 535 | 869 |
| REDUCTION-% (SEE FIG. 41) | | | | | | | | | -13.5 | -11.7 | -8.6 | -5.5 | |
| FOUR PEAKS - 0 | | 0.095-0.115 | 87.07 | 0.099 | 4 | 0.00 | 0.0 | | 151 | 227 | 357 | | |
| FOUR PEAKS - 1.00 | | 0.114-0.115 | 93.92 | 0.103 | 4 | 1.00 | 4.0 | | 129 | 204 | 316 | 485 | 768 |
| REDUCTION-% (SEE FIG.42) | | | | | | | | | -14.57 | -10.13 | -13.9 | | |
| SIX PEAKS-0 | | 0.095-0.109 | 81.60 | 0.096 | 6 | 0.00 | 0.0 | | 161 | 259 | 391 | 614 | |
| SIX PEAKS-1.00 | | 0.110 | 87.94 | 0.100 | 6 | 1.00 | 6.0 | | 135 | 216 | 332 | 511 | 843 |
| REDUCTION-% (SEE FIG. 36) | | | | | | | | | -16.15 | -16.6 | -15.09 | -16.78 | |
| CMD-TRUN-STAR -0 | | 0.099-0.105 | 79.19 | 0.095 | 5 | 0.00 | 0.0 | | 165 | 230 | 346 | 533 | 892 |
| CMD-TRUN-STAR-1.50 | | 0.107-0.107 | 87.97 | 0.100 | 5 | 1.50 | 7.5 | | 132 | 206 | 315 | 473 | 745 |
| REDUCTION-% (NOT SHOWN). | | | | | | | | | -20.0 | -10.4 | -9.0 | -11.3 | -16.5 |
| SCORPIAN-D | | 0.105-0.113 | 86.72 | 0.099 | 3 | 0 | 0.0 | | 159 | 257 | 401 | 647 | |
| SCORPIAN -1.00 | | 0.120-0.125 | 89.40 | 0.101 | 3 | 1.00 | 3.0 | | 143 | 228 | 352 | 550 | 899 |
| REDUCTION-% (SEE FIG. 28) | | | | | | | | | -10.1 | -11.3 | -12.2 | -15.0 | |
| TRI-LOBAL PLUS- 0 | | 0.128-0.133 | 78.60 | 0.094 | 3 | 0 | 0.0 | | 175 | 292 | 461 | 757 | |
| TRI-LOBAL PLUS - 100 | | 0.109-0.117 | 83.71 | 0.098 | 3 | 1.00 | 3.0 | | 149 | 241 | 461 376 | 602 | |
| REDUCTION-% (NOT SHOWN) | | | | | | | | | -14.86 | -17.47 | -18.44 | -20.48 | |
| QUAD-LOBAL PLUS-0 | | 0.94-0.118 | 79.48 | 0.095 | 4 | 0 | 0.0 | | 156 | 261 | 378 | 596 | |
| QUAD-LOBAL PLUS-1.50 | | 0.118-0.119 | 86.58 | 0.099 | 4 | 1.50 | 6.0 | | 138 | 220 | 340 | 540 | 902 |
| REDUCTION-% (NOT SHOWN) | | | | | | | | | -11.54 | -15.71 | -10.05 | -9.396 | |
| STAR FULL MASS - 0 | | 0.115-0.120 | 75.63 | 0.093 | 5 | 0 | 0.0 | | 214 | 306 | 447 | 658 | |
| STAR FULL MASS -1.50 | | 0.125 | 84.23 | 0.098 | 5 | 1.50 | 7.5 | | 149 | 239 | 373 | 596 | |
| REDUCTION-% | | | | | | | | | -30.4 | -21.9 | -16.6 | -9.4 | |

Table 3 (below) provides a summary of the various shapes tested reflecting noise levels at 6000 and 8000 rpm respectively. The data was sorted so as to present in descending order at 8000 rpm. This allows a review of the performance of the shapes tested plus the control samples. All shapes outperformed the round control samples at both 6000 rpm and 8000 rpm. As can be seen noise levels from 100.0 dB to 110.0 dB were measured for the shapes indicated, all below the 112 : 0 of the round control No. 3.

**Table 3**

| BEST PERFORMERS-NOISE BEST TWIST PER INCH SELECTED | | | | | | | | | | |
|---|---|---|---|---|---|---|---|---|---|---|
| SHAPE | PATENT FIG. NO. | ASPECT RATIO | TPI | SIZE | | | | NOISE LEVEL | | |
| | | | | MEASURED (inches) | | EQUIVALENT (inches) | | 6000 rpm (dB) | | 8000 rpm (dB) |
| | | | | | | | | | | |
| BI-LOBAL | N.S. | 1.43 TO 1 | 1.00 | 0.117 | | 0.096 | | 92.9 | | 100.3 |
| HEXA-LOBAL | 9 | 3 to 1 | 1.50 | 0.113 | | 0.098 | | 83.3 | | 100.4 |
| HEXA-LOBAL | 8 | 2 to 1 | 1.50 | 0.105 | | 0.099 | | 94.6 | | 101.2 |
| OCTA-LOBAL | 12 | 3 to 1 | 1.50 | 0.111 | | 0.098 | | 94.4 | | 101.3 |
| QUADRA-LOBAL PLUS | N.S | 3 to 1 | 1.50 | 0.119 | | 0.099 | | 94.1 | | 101.5 |
| OCTA-LOBAL | N.S | 4 to 1 | 1.50 | 0.114 | | 0.100 | | 95.5 | | 101.6 |
| TRUNCATED-STAR | 36 | | 1.50 | 0.107 | | 0.100 | | 95.3 | | 101.7 |
| HEXA-LOBAL | 10 | 4 to 1 | 1.50 | 0.120 | | 0.098 | | 94.2 | | 101.8 |
| SIX-PEAKS | 42 | | 1.50 | 0.110 | | 0.100 | | 95.0 | | 102.1 |
| SCORPION | N.S | | 1.00 | 0.125 | | 0.101 | | 95.2 | | 102.3 |
| FOUR PEAKS | 41 | | 1.00 | 0.115 | | 0.103 | | 95.7 | | 102.4 |
| HEPTA-LOBAL | 40 | | 1.50 | 0.104 | | 0.099 | | 97.0 | | 102.5 |
| QUADRA-LOBAL | 6 | 3 to 1 | 1.50 | 0.127 | | 0.098 | | 95.0 | | 102.7 |
| TRI-LOBAL PLUS | 28 | 3 to 1 | 1.00 | 0.133 | | 0.098 | | 95.0 | | 102.7 |
| SQUARE | N.S | | 0.50 | 0.117 | | 0.101 | | 95.7 | | 102.8 |
| PENTA-LOBAL | 7 | 3 to 1 | 0.75 | 0.124 | | 0.101 | | 95.9 | | 103.3 |
| TRI-LOBAL | 3 | 3 to 1 | 1.00 | 0.142 | | 0.099 | | 96.1 | | 103.6 |
| OCTA-LOBAL | 11 | 2 to 1 | 0.75 | 0.099 | | 0.098 | | 106.4 | | 110.0 |
| ROUND. CONTROL 3 | N.S | 1 | 0 | 0.098 | | 0.096 | | 108.0 | | 112.0 |
| ROUND-CONTROL2 2 | N.S | 1 | 0 | 0.100 | | 0.100 | | 107.7 | | 112.5 |

| | | | | | | | | | | |
|---|---|---|---|---|---|---|---|---|---|---|
| * N.S. in the column marked "Patent Figure No. indicates no figure is shown. | | | | | | | | | | |

Table 4 (below) presents in similar fashion the results obtained for the power required to rotate (spin) the trimmer head with line attached and extended. While several shapes studied outperformed the round controls, all improved with regard to the power required to operate when compared to the untwisted version of the same line (see also Table 2 above).

**Table 4**

| BEST PERFORMERS - POWER BEST TWIST PER INCH SELECTED | | | | | | | | | | |
|---|---|---|---|---|---|---|---|---|---|---|
| SHAPE | PATENT FIGURE NO. | ASPECT RATIO | TPI | SIZE | | | | POWER REQUIRED | | |
| | | | | MEASURED (inches) | | EQUIVALENT (inches) | | 6000 rpm (watts) | | 8000 rpm (watts) |
| | | | | | | | | | | |
| BI-LOBAL | N.S. | 1.43 to 1 | 0.75 | 0.116 | | 0.095 | | 171 | | 395 |
| HEXA-LOBAL | N.S. | 2 to 1 | 1.50 | 0.105 | | 0.099 | | 189 | | 439 |
| ROUND - CONTROL 2 | N.S. | 1 | 0.00 | 0.100 | | 0.100 | | 191 | | 449 |
| HEXA-LOBAL | 8 | 3 to 1 | 1.50 | 0.113 | | 0.098 | | 192 | | 454 |
| HEPTA-LOBAL | 40 | 1.1 to 1 | 1.50 | 0.104 | | 0.099 | | 192 | | 455 |
| ROUND - CONTROL 3 | N.S. | 1 | 0.00 | 0.095 | | 0.095 | | 195 | | 469 |
| OCTA-LOBAL | 12 | 3 to 1 | 1.50 | 0.111 | | 0.098 | | 201 | | 470 |
| OCTA-LOBAL | N.S. | 4 to 1 | 1.50 | 0.114 | | 0.100 | | 199 | | 473 |
| TRUNC.-STAR | 36 | | 1.50 | 0.107 | | 0.100 | | 206 | | 473 |
| OCTA-LOBAL | 11 | 2 to 1 | 0.75 | 0.099 | | 0.097 | | 204 | | 479 |
| FOUR PEAKS | 41 | | 1.00 | 0.115 | | 0.103 | | 204 | | 485 |
| SIX PEAKS | 42 | | 1.50 | 0.110 | | 0.100 | | 210 | | 502 |
| SQUARE | N.S. | | 1.50 | 0.119 | | 0.102 | | 219 | | 535 |
| QUADRA-LOBAL PLUS | N.S. | | 1.50 | 0.119 | | 0.099 | | 220 | | 540 |
| HEXA-LOBAL | 10 | 4 to 1 | 1.50 | 0.120 | | 0.098 | | 221 | | 552 |
| SCORPION | N.S. | | 1.50 | 0.128 | | 0.104 | | 226 | | 562 |
| QUADRA-LOBAL | 6 | 3 to 1 | 1.50 | 0.127 | | 0.098 | | 225 | | 584 |
| STAR (@ MASS) | N.S. | | 1.50 | 0.125 | | 0.098 | | 239 | | 596 |
| TRI-LOBAL | 3 | to 1 | 1.50 | 0.140 | | 0.100 | | 237 | | 597 |
| PENTA-LOBAL | 7 | 3 to 1 | 0.50 | 0.124 | | 0.097 | | 249 | | 608 |
| TRI -LOBAL PLU5 | 28 | | 1.50 | 0.135 | | 0.100 | | 237 | | 610 |

| | | | | | | | | | | |
|---|---|---|---|---|---|---|---|---|---|---|
| * N.S. in the column marked "Patent Figure No. indicates no figure is shown | | | | | | | | | | |

The extensive testing of shaped samples as recorded above provide ample proof of the effect of twisting on a variety of shapes. It is shown that, afer measuring the performance, noise generated, and power required for any particular shape, one may select a twist level from between 0.25 and 2.00 TPI and provide a line of improved performance. Since a multitude of shapes have been previously sold and identified with specific markets, products, and/or suppliers, it is advantageous to know that any shape can be improved in performance by twisting from 0.25 to 2.00 TPI and selecting the best performing line in regards to cutting performance, noise reduction, or reduction in power required. Additionally, an optimum line may be configured which combines in a predetermined manner the noise, power required and cutting performance (as determined by nodes per inch).

It is apparent from an examination of the various cross-sectional configurations which are employed with the practice of the invention described above that the invention is capable of use in a large number of different overall shapes to form the rotated lobe or twisted line of the invention. The foregoing description of the various embodiments of the invention is to be considered as illustrative and not as limiting.

Various other changes and modifications will occur to those skilled in the art for accomplishing substantially the same functions, in substantially the same way, to achieve substantially the same result, without departing from the true scope of the invention as defined in the appended claims.

## Claims

1. An elongated length of string trimmer line including a filament body (124 to 202) having a longitudinal axis, and a plurality of protruding lobes extending from the filament body, wherein cross sections perpendicular to the longitudinal axis of the filament body spaced along the length of the filament body are the same, **characterized in that** the trimmer line is rotated about the longitudinal axis of the filament body by from about 0.25 to 2.0 rotations per inch.

2. An elongated length of string trimmer line according to Claim 1 further **characterized in that** the plurality of lobes is between three and twelve.

3. An elongated string trimmer line according to Claims 1,2 or 3 further **characterized in that** the rotation of the trimmer line about the longitudinal axis causes the lobes to form between 0.75 to 24 nodes per inch.

4. An elongated length of string trimmer line according to Claims 1,2 or 3 further **characterized in that** the rotation of the lobes about the longitudinal axis of the filament body is uniform throughout the length of the filament body.

5. An elongated length of string trimmer line according to Claims 1,2,3 or 4 further **characterized in that** the filament body and the lobes are made of synthetic polymeric material.

6. An elongated length of string trimmer line according to Claims 1,2,3,4 or 5 further **characterized in that** the protruding lobes are symmetrically placed around the periphery of the filament body.

7. An elongated length of string trimmer line according to Claims 1 or 6 further **characterized in that** the protruding lobes are symmetrical in shape.

8. An elongated length of string trimmer line according to Claims 1 or 6 further **characterized in that** the protruding lobes are asymmetrical in shape.

9. An elongated length of string trimmer line according to Claims 1,2,3,4 or 5 further **characterized in that** the protruding lobes are asymmetrically located around the filament body.

10. A string trimmer line including an elongated length of filament body (124 to 202) having a longitudinal axis; a plurality of protruding lobes extending from the filament body **characterized in that** the lobes are arranged in a uniform spiral configuration along the length of the filament body to form a continuous rotating spiral pattern which varies continuously by a constant amount along the longitudinal axis of the filament body, and the rotation of the protruding lobes is between 0.25 to 2.0 rotations per inch of the filament body.

11. A string trimmer line according to Claim 10 further **characterized in that** the number of protruding lobes is between three and twelve.

12. A string trimmer line according to Claims 10 or 11 further **characterized in that** the lobes are equi-angularly spaced about the axis of the filament body at each cross section thereof.

13. A string trimmer line according to Claims 10,11 or 12 further **characterized in that** the plurality of lobes all are of the same shape.

14. A string trimmer line according to Claims 10,11 or 12 further **characterized in that** the protrudnig lobes are of different shapes.

15. A string trimmer line according to any of Claims 10 to 14 further **characterized in that** the trimmer line is formed of extruded monofilament nylon.

16. A string trimmer line according to any of Claims 10 to 15 further **characterized in that** the filament body is symmetrical in cross section.

17. A string trimmer line according to any of Claims 10 to 15 further **characterized in that** the cross section of the filament body is asymmetrical.

18. A string trimmer line according to Claims 10,11 or 12 further **characterized in that** the protruding lobes are of different sizes.

19. A string trimmer line according to any of Claims 10 to 18 further **characterized in that** the protruding lobes are located symmetrically around the longitudinal axis of the filament body.

20. A string trimmer line according to any of Claims 10 to 19 further **characterized in that** the number of rotations of the lobes and the number of lobes is selected to form between 0.75 to 24 nodes per inch of length of the filament body.
